# EUROPEAN PATENT APPLICATION

(11) **EP 2 636 695 A1**
(43) Date of publication of application: **11.09.2013**
(21) Application number: 10859318.7
(22) Date of filing: 30.12.2010
(51) Int. Cl.: C08G 64/08, C08G 64/10, C08L 69/00, C08J 5/00

(54) **POLYCARBONATE RESIN AND THERMOPLASTIC RESIN COMPOSITION INCLUDING POLYCARBONATE RESIN**

(30) Priority: 05.11.2010 KR 20100109520
(71) Applicant: Cheil Industries Inc., Gyeongsangbuk-do 730-710 (KR)
(72) Inventor: KIM, Mie Ock, Uiwang-si Gyeonggi-do 437-010 (KR); BAE, Jin Yong, Uiwang-si Gyeonggi-do 437-010 (KR); KWON, O Sung, Uiwang-si Gyeonggi-do 437-010 (KR); JANG, Bok Nam, Uiwang-si Gyeonggi-do 437-010 (KR)
(74) Representative: Bublak, Wolfgang
(86) International application number: PCT/KR2010/009595
(87) International publication number: WO 2012/060516

(57) **Abstract**

This invention provides a polycarbonate resin which includes a repeating unit in its main chain as per the following chemical formula 1:

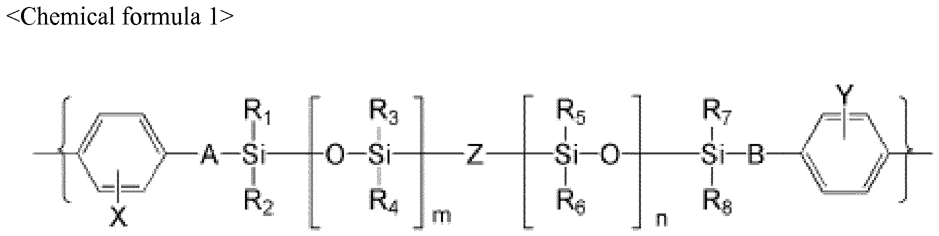

In said formula, R₁∼R₈ each are independently C₁-C₁₀ alkyl groups or C₆-C₁₈ aryl groups substituted by one or more groups selected from a group comprising C₁-C₁₀ alkyl group, C₆-C₁₈ aryl group, halogen atom, and C₁-C₁₀ alkoxy group; A and B each are independently C₁ -C₁₀ alkylene group, C₆-C₁₈ arylene group, -O- or -S-; Z is C₁-C₁₈ alkylene group, C₆-C₁₈ cyclo alkylene group, or substituted or non-substituted C₆-C₁₈ arylene group; X and Y each are independently hydrogen, halogen, C₁-C₁₈ alkoxy group, C₁-C₁₀ alkyl, or C₆-C₁₈ aryl group; wherein m and m are positive integers and n+m is an integer having a value of 8 to 100.

## Description

### FIELD OF THE INVENTION

The present invention relates to a polycarbonate resin. In particular, the present invention relates to a composition of polycarbonate resin and thermoplastic resin with excellent impact strength, chemical resistance, and transparency.

### BACKGROUND OF THE INVENTION

A polycarbonate is a thermoplastic resin having an aromatic polycarbonate ester with excellent mechanical properties, self-extinguishing property, dimensional stability, thermostability and transparency. Due to these excellent properties, polycarbonate has become an exemplary engineering plastic, with increasing scope in the visible parts of electrical and electronic products, optical discs, and automobile parts and the like. The scope of use of polycarbonate has further increased recently. Research is being carried out to improve the property of polycarbonate and to use polycarbonate in a variety of fields. In particular, there are many research reports which suggest modification of the properties of polycarbonate by copolymerization of more than two types of diols having different structures and by including polymers, the structures of which are different from diols, in the main chain of the polycarbonate. For example, in Korean patent application No. 2009-0035031, a resin composition is disclosed to improve the chemical resistance and the fire retardant property by copolymerization of a specific structure with the polycarbonate.

In particular, several researches have been undertaken to improve the limited chemical resistance property of polycarbonate. Effort was also made to resolve the problem of impairment of its mechanical properties due to the penetration of diluent solvents inside the paint while coating, if a polycarbonate resin is being used as a visible part for the electrical and electronic products. In order to solve the problem of impairment of mechanical properties of the polycarbonate, efforts have been made to improve the physical properties of the polycarbonate by blending the polycarbonate with other thermoplastic resins.

In these technological trials, although the chemical resistance of the blended polycarbonate improved, the impact resistance or transparency could not be improved. For example, in the US Patent No. 4,188,314, an article is disclosed which is comprised of polycarbonate and copolyester having improved chemical resistance, but a sufficient impact strength could not be obtained by the method used therein. While, a resin composition comprising copolymer polycarbonate, copolyester, and olefin acrylate polymer bound by 25 to 90 mole% ester is disclosed in the US patent no. 4,634,737, this composition shows a very low transparency, although the chemical resistance was improved.

In accordance with another technological trial, there have been efforts to improve the chemical resistance in the main chain of the polycarbonate by introduction of another polymer. In particular, research on a polycarbonate comprising a polysiloxane structure has been undertaken. In Korean patent application Nos. 2006-0058195 and 2007-0071592, the chemical resistance of the polycarbonate was attempted to be improved by blending the same with a polyester or polysulfone resin. An improvement in the polycarbonate was obtained by including the copolymer of a specific chemical structure into the polycarbonate in US patent No. 5,401,826. However, in this case as well, although the chemical resistance and impact resistance were improved, there was an impairment of the transparency.

The present invention was carried out with an object of developing a polycarbonate resin with excellent properties of impact strength, chemical resistance and transparency.

### OBJECTS OF THE INVENTION

The object of the present invention is to provide a polycarbonate resin with excellent impact strength and chemical resistance.

Another object of the present invention is to provide a polycarbonate resin having excellently high transparency while providing an excellent impact strength and chemical resistance.

Yet another object of the present invention is to provide a thermoplastic resin composition comprising a polycarbonate resin having the aforesaid characteristics and to provide a product formed from this resin composition.

The aforesaid and other objects of the present invention can all be achieved by the present invention as explained in the following description.

### SUMMARY OF THE INVENTION

To resolve the aforesaid technological problems, the present invention provides a polycarbonate resin which comprises a repeating unit of the following chemical formula 1 in its main chain:

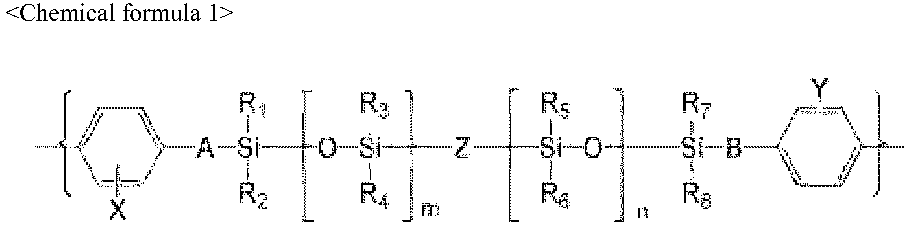

Wherein, in said formula, R₁∼ R₈ each are independently substituted C₁-C₁₀ alkyl groups or C₆ -C₁₈ aryl groups substituted by one or more groups selected from a group comprising C₁-C₁₀ alkyl group, C₆-C₁₈ aryl group, halogen atom, and C₁-C₁₀ alkoxy group; A and B each are independently C₁ -C₁₀ alkylene group, C₆-C₁₈ arylene group, -O- or -S-. Z is C₁-C₁₈ alkylene group, C₆-C₁₈ cyclo alkylene group, or substituted or non-substituted C₆-C₁₈ arylene group; X and Y each are independently hydrogen, halogen, C₁-C₁₈ alkoxy group, C₁-C₁₀ alkyl group, or C₆-C₁₈ aryl group; while n and m are positive integers, where n+m is an integer having a value from 8 to 100.

In an embodiment of the present invention, it is preferred if the repeating unit in said chemical formula 1 is from 2.8 to 3.4 % by weight of the total polycarbonate resin.

In another embodiment of the present invention, it is preferred if said Si content is from 4.7 to 4.9 % by weight of the total polycarbonate resin.

In yet another embodiment of the present invention, it is preferred if the repeating unit in said chemical formula 1 is from 2.3 to 2.5 % by weight of the total polycarbonate resin, and at the same time, said Si contents is from 5.5 to 7.0 % by weight of the total polycarbonate resin.

In said chemical formula 1, said substituent is C₁-C₆ alkyl group, C₆-C₁₈ aryl group, or halogen. Said substituent is preferably a C₁-C₆ alkyl group, more preferably a C₁-C₃ alkyl group.

In Si-Z-Si bond in chemical formula 1, Si can be either bound to the Z group or can be bound to the substituent which is included in said Z group.

Said X and Y each are independently hydrogen, halogen, C₁-C₁₈ alkoxy group, C₁-C₁₀ alkyl group, or C₆-C₁₈ aryl group. Preferably, X and Y each are independently H or C₁-C₃ alkoxy, more preferably hydrogen or methoxy. Said X and Y each can be independently represented as one number to four numbers in benzene moiety, more preferably X and Y each can be presented as one number to two numbers. Said X and Y each can be independently bound at anyone of the positions among the positions 2, 3, 5, and 6 in benzene.

Said X and Y can be preferably bound at position 3 in the benzene structure.

In said chemical formula 1, Z is a substituted or non-substituted C₁-C₁₈ alkylene group, substituted or non-substituted C₆-C₁₈ cyclo alkylene group, or substituted or non-substituted C₆-C₁₈ arylene group. Preferably, Z can be a C₁-C₁₀ alkylene group, substituted or non-substituted C₆-₁₀ cycloalkylene group, or substituted or non-substituted C₆-C₁₀ arylene group.

In the compound of chemical formula 1, if Z is C₃-C₁₂ cyclo alkylene group, then a notched IZOD impact strength of a specimen of thickness 1/4" as per ASTM D256 is measured from 60 to 90 kgf•cm/cm.

In the compound of chemical formula 1, if Z is a linear C₁-C₁₀ alkyl, then Haze (Hz) measured by Haze meter for the specimen extruded with a thickness of 2.5mm is from 0.1 to 10%, and the Total Transmitted Light (TT) is from 85 to 99%.

In the compound of chemical formula 1, if Z is a C₆-C₁₈ arylene group, then the changes in the tensile strength before and after immersing the dumbbell specimen prepared as per ASTM No.1 into gasoline for seven days is from 0 to 25%.

The present invention provides a polycarbonate resin composition comprising a polycarbonate resin in accordance with the present invention and a polycarbonate resin *excluding* Si. The ratio of contents between said polycarbonate resin and polycarbonate resin without said Si is in a ratio ranging from 40:60 to 60:40.

The present invention provides a new thermoplastic resin composition by adding additives into said polycarbonate resin, to form a formed product from said thermoplastic resin composition.

### DETAILED DESCRIPTION OF THE INVENTION

The present invention relates to a polycarbonate resin and relates to a polycarbonate resin having an excellent impact strength, chemical resistance, and transparency and relates to a thermoplastic resin composition containing the same.

The present invention relates to a polycarbonate resin with excellent impact strength and high transparency while providing chemical resistance to an organic solvent by introducing a polysiloxane repeating unit into a main chain of the polycarbonate.

In the conventional technology of providing improved chemical resistance and impact strength in the polycarbonate resin, there were problems of transparency impairment while the chemical resistance and impact strength were improved. Therefore, by the present invention a polycarbonate resin composition has been developed having an improved chemical resistance and impact strength while maintaining the transparency. The object was achieved by introducing a siloxane polymer having a specific chemical strength that can improve the chemical resistance and impact strength of the main chain of the polycarbonate.

The present invention is carried out by introducing the repeating unit into the main chain of the polycarbonate:

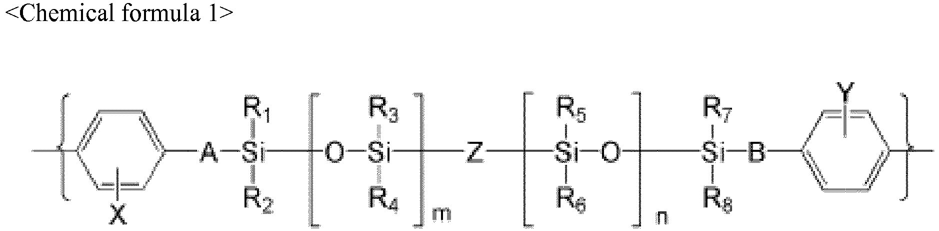

In the aforesaid chemical formula, R₁ ∼R₈ each are independently substituted C₁-C₁₀ alkyl groups or C₆ -C₁₈ aryl groups substituted by one or more groups selected from a group comprising C₁ -C₁₀ alkyl group, C₆ -C₁₈ aryl group, halogen atom, and C₁-C₁₀ alkoxy group. A and B each are, independently substituted C₁ -C₁₀ alkylene group, C₆ -C₁₈ arylene group, - O-, or -S-. Z is C₁ -C₁₈ alkylene group or C₆ -C₁₈ cyclo alkylene group, or substituted or non-substituted C₆ -C₁₈ arylene group. X and Y each are independently substituted hydrogen, halogen, C₁ -C₁₈ alkoxy group, C₁ -C₁₀ alkyl group, or C₆ -C₁₈ aryl group. Wherein, n and m are positive integers, and wherein n+m is integer having a value of 8 to 100.

In another exemplary embodiment of the present invention, it is preferable if the repeating unit in said chemical formula 1 is from 2.8 to 3.4 % by weight of the total polycarbonate resin.

In another exemplary embodiment of the present invention, it is preferable if said Si content is from 4.7 to 4.9 % by weight of the total polycarbonate resin.

In yet another exemplary embodiment of the present invention, it is preferable if said repeating unit in said chemical formula 1 is from 2.3 to 2.5 % by weight of the total polycarbonate resin, and said Si content is from 5.5 to 7.0 % by weight of the total polycarbonate resin.

In said chemical formula 1, said substituent is a C₁-C₆ alkyl group, C₆-C₁₈ aryl group, or halogen. Said substituent is preferably a C₁-C₆ alkyl group. More preferably, it is a C₁-C₃ alkyl group.

In the Si-Z-Si bond in said chemical formula 1, Si can be bound either to the Z group or can be bound to a substituent which is included in the Z group.

Said X and Y each are independently hydrogen, halogen, C₁-C₁₈ alkoxy, C₁-C₁₀ alkyl group, or C₆-C₁₈ aryl group. Preferably, X and Y each are independently hydrogen or C₁-C₃ alkoxy, but more preferably, these are hydrogen or methoxy group. Said X and Y each can be independently represented as one to four in number in benzene moiety, preferably said X and Y each can be presented as one to two in numbers. Said X and Y each can be independently bound at any position among the positions 2, 3, 5, and 6 of benzene. Said X and Y each can be preferably bound at position 3 in benzene.

In said chemical formula 1, Z is a substituted or non-substituted C₁-C₁₈ alkylene group, substituted or non-substituted C₆-C₁₈ cyclo alkylene group, or substituted or non-substituted C₆-C₁₈ arylene group. Preferably, Z can be a substituted or non-substituted C₁-C₁₀ alkylene group, substituted or non-substituted C₆-C₁₀ cyclo alkylene group, or substituted or non-substituted C₆-C₁₀ arylene group.

In the compound of said chemical composition 1, if Z is a C₃-C₁₂ cyclo alkylene group, then a notched IZOD impact strength of a specimen of thickness 1/4" measured as per ASTM D256 is from 60 to 90 kgf.cm/cm.

In the compound of said chemical formula 1, if Z is a linear C₁-C₁₀ alkyl group, then Haze (Hz) of the specimen extruded with a thickness of 2.5mm measured by the Haze meter is from 0.1 to 10%, and the Total Transmittance of light (TT) is from 85 to 99%.

In the compound of chemical formula 1, if Z is a C₆-C₁₈ arylene group, then the changes in the tensile strength of the dumbbell shaped test specimen prepared as per ASTM No. 1 before and after immersing into gasoline for seven days is from 0 to 25 %.

The polycarbonate resin of said chemical formula 1 in which a polysiloxane repeating unit can be included, is manufactured by reacting one or more compounds selected from a group comprising diphenols, which can be indicated by the chemical formula 2 given below, phosgene, ester, and carbonate:

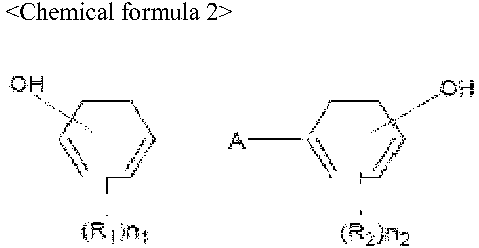

In said chemical formula, A is a connecting group selected from a group comprising a single bonded, substituted, or non-substituted straight chain or a branched C₁∼ C₃₀ alkylene group, substituted or straight chain or branched C₂∼C₅ alkylene group, a substituted or non-substituted C₂∼C₅ alkylidene group, a substituted or a non-substituted straight chain or branched C₁∼C₃₀ haloalkylene group, a substituted or non-substituted C₅∼C₆ cycloalkylene group, a substituted or non-substituted C₅∼C₆ cycloalkenylene group, a substituted or non-substituted C₅∼C₁₀ cycloalkylidene group, a substituted or non-substituted C₆∼C₃₀ arylene group, a substituted or non-substituted straight chain or a branched C₁∼ C₂₀ alkoxylene group, halogen acid ester group, carbonate group, CO, S, and SO₂. R1 and R2 of each group are independently substituted or non-substituted C₁∼C₃₀ alkyl group, or substituted or non-substituted C₆∼C₃₀ aryl group. Where, n₁ and n₂ each are independently integers having a value of 0 to 4.

Said term "Substituted" means hydrogen atom is substituted by a substituent selected from a group comprising halogen group, alkyl group, C₁∼ C₃₀ alkyl group, C₁∼C₃₀ haloalkyl group, C₆∼C₃₀ aryl group, C₁∼C₂₀ alkoxy group, and any combination of these.

Diphenols, which are indicated by chemical formula 2, can constitute in two or more combinations, the repeating unit of the polycarbonate resin. Examples of said diphenols are hydroquinone, resorcinol, 4,4'-dihydroxydiphenyl, 2,2-bis(4-hydroxyphenyl) propane (also called as 'bisphenol-A'), 2,4-bis(4-hydroxyphenyl)-2-methylbutane, bis(4-hydroxyphenyl) methane, 1,1-bis(4-hydroxyphenyl) cyclohexane, 2,2-bis(3-chloro-4-hydroxyphenyl) propane, 2,2-bis(3,5-dimethyl-4-hydroxyphenyl) propane, 2,2-bis(3,5-dichloro-4- hydroxyphenyl) propane, 2,2-bis(3,5-dibromo-4- hydroxyphenyl) propane, bis(4-hydroxyphenyl) sulphoxide, bis(4-hydroxyphenyl) ketone, bis(4-hydroxyphenyl) ether. Among said diphenols, 2,2-bis(4-hydroxyphenyl) propane, 2,2-bis(3,5-dichloro-4-hydroxyphenyl) propane or 1,1-bis(4-hydroxyphenyl) cyclohexane can preferably be used. More preferably, 2,2-bis(4-hydroxyphenyl) propane can also be used among these.

Said polycarbonate resin can be a composite of copolymers prepared from more than two types of diphenols. For said polycarbonate resin, linear polycarbonate resin, branched polycarbonate resin, and polyestercarbonate copolymer resin can also be used.

As said linear polycarbonate resins, there are bisphenol-A polycarbonate resins. As said branched polycarbonate resin, there are examples of composition prepared by reacting a multifunctional aromatic compound, such as tremellitic anhydride, tremellitic acid with diphenols and carbonate. Said multifunctional aromatic compound can be included at 0.05 to 2 mol% for total branched polycarbonate resin. As said polycarbonate copolymer resins, there are examples of composition prepared by reacting bifunctional carboxylic acid with diphenols and carbonate. During this reaction, diarylcarbonate, such as diphenyl carbonate can be used as said carbonate.

The polycarbonate resin in the present invention can be prepared by copolymerization by adding the siloxane polymer of the following chemical formula 3 into diphenols which is indicated by said chemical formula 2. That means, the polycarbonate resin in the present invention can be prepared by copolymerization of the compound of chemical formula 3 with one or more compounds selected from a group comprising diphenols as indicated by said chemical formula 2, phosgene, halogen acid ester, and carbonate.

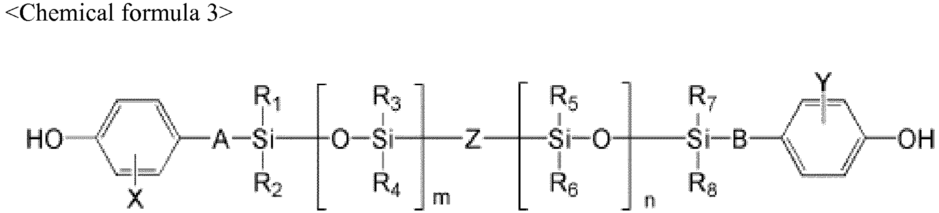

In said chemical formula, R₁ ∼R₈ each are independently substituted C₁ -C₁₀ alkyl groups or C₆ -C₁₈ aryl groups substituted with one or more groups selected from a group comprising C₁-C₁₀ alkyl group, C₆ -C₁₈ aryl group, halogen atom, and C₁-C₁₀ alkoxy group. A and B each are independently C₁-C₁₀ alkylene group, C₆-C₁₈ arylene group, -O-, or -S-. Z is C₁-C₁₈ alkylene group or C₆ -C₁₈ cyclo alkylene group, or substituted or non-substituted C₆-C₁₈ arylene group. X and Y each are independently hydrogen, halogen, C₁-C₁₈ alkoxy group, C₁ -C₁₀ alkyl group, or C₆ -C₁₈ aryl group. Wherein, n and m are positive integers, and wherein n+m is an integer of 8 to 100.

The method of preparation of siloxane polymer in accordance with the present invention is as given below.

Bis-hydroxyaryl siloxane as a practical example of said chemical formula 3 (chemical formula 4 below) can be prepared during the stages of synthesizing monohydroxy siloxane (chemical formula 7) by reacting hydride terminated siloxane (chemical formula 5 below) with phenol derivatives as indicated by chemical formula 6 below (the first stage); and said monohydroxy siloxane is reacted with diene during the second stage:

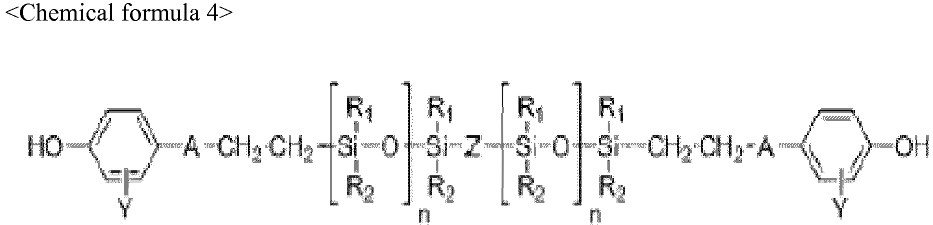

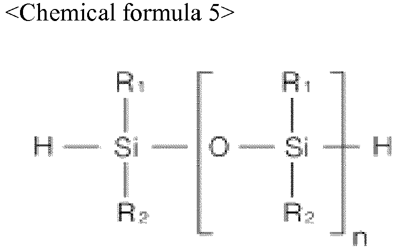

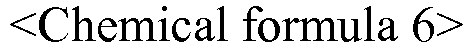

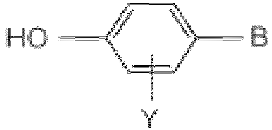

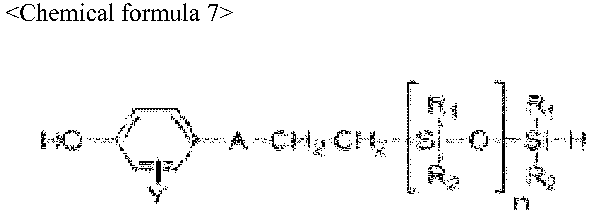

In said chemical formula, R₁ and R₂ each are independently C₁-C₁₀ alkyl group or C₆ -C₁₈ aryl having C₁-C₁₀ alkyl group, C₆-C₁₈ aryl group, or halogen or alcoxy group.

A is C₁ -C₁₀ alkylene group or C₆-C₁₈ arylene group having C₁-C₁₀ alkylene group, C₆-C₁₈ arylene group, -O- or -S-.

B is C₁-C₁₀ alkylene group or C₆-C₁₈ arylene group having double bond at their terminals, or C₁-C₁₀ alkylene group or C₆-C₁₈ arylene group having double bond at their terminals or -O- or -S-.

Z is a substituted or non-substituted C₁-C₁₈ alkylene group, a substituted or non-substituted C₆-C₁₈ cycloalkylene group, or a substituted or non-substituted C₆-C₁₈ arylene group.

Y is hydrogen, halogen, C₁-C₁₈ alkoxy, C₁-C₁₀ alkyl group or C₆-C₁₈ aryl group. Wherein, n is an integer having a value of 4 to 100.

### The first stage

The first stage is synthesis of monohydroxy siloxane (chemical formula 7) by reacting hydride terminated siloxane (chemical formula 5) and phenol derivative (chemical formula 6) in the presence of catalyst.

As said catalysts, catalyst comprising platinum can be used. For example, catalyst can be a platinum atom itself or a compound containing platinum. Preferably, catalyst of H₂PtCl₆, Pt₂{[(CH₂=CH)Me₂Si]₂O}₃, Rh[(cod)₂]BF₄, Rh(PPh₃)₄Cl, or Pt/C can be used either singly or in combination, but catalysts are not limited to these examples. More preferably, catalyst Pt/C, for example, 10% Pt/C can be used.

Said catalyst can be used at a rate of 10 to 500 ppm, preferably at a rate of 50 to 150 ppm.

Said reaction can be carried out inside an organic solvent. For example, said reaction can be carried out inside 1,2-dichloroethane, toluene, xylene, dichlorobenzene, or a composite solvent of these, but the solvent is not limited to these solvents. Preferably, the reaction can be carried out with toluene.

Reaction temperature and time can be adjusted according to the reactivity of chemical formula 5 and chemical formula 6. For example, said reaction can be carried out at a reaction temperature of 60 to 140°C, preferably at 110 to 120°C, for a reaction time of 2 to 12 hours, preferably for 3 to 5 hours.

The compound of chemical formula prepared in said stage 1 can be purified and used during the next stage or can be used *in situ* during the next stage without additional purification.

### The second stage

The second stage is the preparation stage of bis-hydroxyaryl siloxane, by making monohydroxy siloxane (chemical formula 7) react with diene.

Said diene can be a diene containing a substituted or non-substituted C₁-C₁₈ alkyl group, a substituted or non-substituted C₆-C₁₈ cycloalkyl group, or a choloralkyl group or a C₆-C₁₈ aryl group. Said substituted group can include a C₁-C₆ alkyl group, C₆-C₁₈ aryl, or halogen. Said substituent is, preferably a C₁-C₆ alkyl group. More preferably, it is a C₁-C₃ alkyl group.

After completing the first stage of the reaction, bis-hydroxyaryl siloxane can be prepared by making the compound of chemical formula 7 react *in situ* after adding diene without purification process.

The reaction temperature and time of monohydroxy aryl siloxane and diene can be adequately adjusted. For example, though the reaction temperature and time which have been used during the first stage of the reaction can be adopted as such, but it is not limited to this range.

Prepared bis-hydroxyaryl siloxane can be purified and recovered through a general method. For example, the reactant is filtered after completion of the second stage of reaction to remove the catalyst. By concentrating the obtained filtrate to remove the reaction solvent and low molecular by-product, bis-hydroxyaryl siloxane (chemical formula 4) can be recovered. According to the purity of bis-hydroxyaryl siloxane, additional purification can be carried out.

Since in the polycarbonate resin, in accordance with the present invention, siloxane moiety and Z in said chemical formula 1 are introduced, modification is possible inside the chain in siloxane polymer moiety. It is possible to adjust the physical properties of the polycarbonate resin, suitable for various applications, by adjusting said Z. For example, if Z is arylene, the transparency and chemical resistance can be improved as compared to the linear alkylene.

The contents of the repeating unit in chemical formula 1 is preferably at 1 to 20 % by weight of the total polycarbonate resin. By adjusting the contents of polysiloxane as indicated by the Chemical formula 1 among the entire polycarbonate resin, the transparency and impact characteristics can be regulated. However, the impact strength of resin becomes excellent with polysiloxane at a percentage higher than 20 % by weight, though it is difficult to ensure the transparency.

Also, Si content is preferably 0.3 to 10 % by weight of the total polycarbonate resin content. It is possible to adjust the transparency and the impact strength by adjusting Si contents of the total polycarbonate resin.

More preferably, the repeating unit in chemical formula 1 should be at a rate of 1.0 to 13 % by weight of the total polycarbonate resin. At the same time, Si content should be 0.3 to 7 % by weight of the total polycarbonate resin. Within said contents ranges, a polycarbonate resin with good impact strength and transparency can be obtained.

Also, it is preferable if m is an integer within a range of 1 to 60 and n is an integer within a range of 1 to 60. More preferably, m+n should be an integer of 8 to 100. It is possible to adjust a balance between the impact characteristic and the transparency by adjusting the chain length of polysiloxane moiety that is present at both the side of Z.

The weight average molecular weight (Mw) of the polycarbonate resin in accordance with the present invention can be 10,000 to 200,000, more particularly it can be 20,000 to 50,000.

The present invention provides a polycarbonate resin according to the present invention and a polycarbonate resin composition comprising a polycarbonate resin *without* Si. The ratio of contents of said polycarbonate resin and polycarbonate resin *not* comprising said Si is from 40:60 to 60:40.

The present invention also provides a thermoplastic resin composition by adding additives into the polycarbonate resin of the present invention.

Said thermoplastic resin composition can be prepared by further selectively adding antioxidants, lubricants, reinforcing agents, fillers, inorganic additives, pigments and/or dyes according to each application.

Among the repeating unit which is included in the thermoplastic resin of the present invention, if Z among the repeating unit of said chemical formula 1 is C₃-C₁₂ cycloalkylene, then a thermoplastic resin composition of the present invention can possess excellent impact strength. Preferably, the notched IZOD impact strength of a specimen of thickness 1/4" measured as per ASTM D256 can be 60 to 90 kgf.cm/cm.

Among the repeating unit of said chemical formula 1 which is included in the polycarbonate resin in the thermoplastic resin composition, if Z is a linear C₃-C₁₂ alkyl group, then said thermoplastic resin composition of the present invention can possess an excellent transparency. Preferably, haze (Hz) of the extruded specimen of thickness 2.5mm measured by Haze meter is from 0.1 to 10% and the Total Transmitted Light (TT) can be 85 to 99%.

In the repeating unit of said chemical formula 1, if Z is C₃-C₁₂ arylene group, then said thermoplastic resin composition has an excellent chemical resistance and preferably, the changes of the tensile strength in a dumbbell shaped test specimen as per ASTM No. 1 before and after immersing it into gasoline for seven days can be below 25 %.

A formed product prepared from said thermoplastic resin composition has a high impact strength, chemical resistance as well as high transparency.

The present invention can be more easily understood with the following practical examples. The following practical examples are provided to exemplify the present invention and not intended to limit the scope of protection which is sought by the scope of the attached patent application.

### EXAMPLES A-F

The substituents in the compound of said chemical formula 1 in the siloxane polymers A, B, C, D, E, and F are as below.

**[Table 1]**

| Substituents in Chemical formula 1 | Siloxane polymer A | Siloxane polymer B |
|---|---|---|
| A | C₃H₆ | C₃H₆ |
| B | C₃H₆ | C₃H₆ |
| Z | 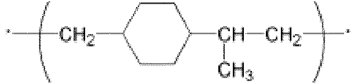 | 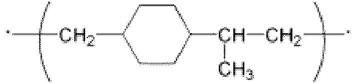 |
| R₁~R₈ | CH₃ | CH₃ |
| X | OCH₃ | OCH₃ |
| Y | OCH₃ | OCH₃ |
| m+n | 20 | 60 |

**[Table 2]**

| Substituents in Chemical formula 1 | Siloxane polymer C | Siloxane polymer D |
|---|---|---|
| A | C3H6 | C3H6 |
| B | C3H6 | C3H6 |
| Z | 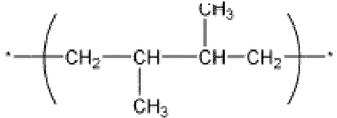 | 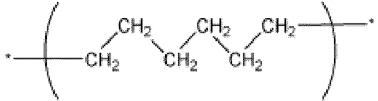 |
| R₁~R₈ | CH₃ | CH₃ |
| X | OCH₃ | OCH₃ |
| Y | OCH₃ | OCH₃ |
| m+n | 20 | 60 |

**[Table 3]**

| Substituents in Chemical formula 1 | Siloxane polymer E | Siloxane polymer F |
|---|---|---|
| A | C3H6 | C3H6 |
| B | C3H6 | C3H6 |
| Z | 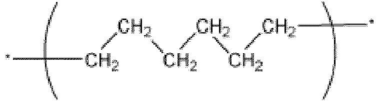 | 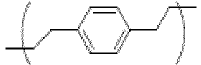 |
| R₁~R₈ | CH₃ | CH₃ |
| X | OCH₃ | OCH₃ |
| Y | OCH₃ | OCH₃ |
| m+n | 20 | 60 |

A siloxane polymer in said practical example A-F was prepared through two stages wherein monohydroxyaryl silxoane is synthesized by making hydride terminated siloxane with phenol derivatives in the presence of catalyst (Pt) in the first stage; and said monohydroxyaryl silxoane and diene are reacted in the second stage.

### EXAMPLES 1-11 AND COMPARATIVE EXAMPLES 1-6

### EXAMPLE 1

After adding 130 ml of 9.1% NaOH aqueous solution, 2,2-bis(4-hydroxyphenyl) propane (BPA) (21.1g, 92.4mmol), methyltributyl ammonium chloride (1.3g, 5.3mmol), 150 ml of methylene chloride, this mixture was strongly stirred. While maintaining the temperature of solution at 20 to 25°C, 50ml of methylene chloride solution, in which triphosgen (10.1g, 101.7mmol) was dissolved, was added. The mixture was stirred for 10 min. while maintaining pH at 6 to 7. After that, siloxane polymer A (14.3g, 6.9mmol) which was dissolved into 15ml of methylene chloride was added. This mixture was stirred for 10 min. while maintaining pH at 10 to 12 by adding 50% NaOH. After that, 2,2-bis(4-hydroxyphenyl) propane (BPA) (84.7g, 371.0mmol), water, and 150ml of methylene chloride were added followed by stirring them for 1 hour. Into this mixture, trimethylamine (1.0g, 9.9mmol), para-cumylphenol (3.8g, 17.9 mmol) were added. This mixture was again stirred while adding 200ml of methylene chloride solution in which triphosgen (40.7g, 411.6mmol) was dissolved slowly into the reactor for 1 hour while maintaining pH of solution at 10 to 12 by adding 50% NaOH. After completing the stirring, the organic layer was separated by stirring the mixture for 1 hour, 200ml of 10% HCl solution was added to neutralize the solution and then washing operation was carried out by water till pH becomes neutral. After washing, a part of the solvent from the organic layer was removed. The polymer was precipitated using methanol. This precipitate was filtered and dried to obtain a powder form polymer. DOSY analysis for this polymer revealed that silicone polymer is bound inside the main chain of polycarbonate. The Si content was analyzed as 2.5 wt% with 1H NMR. GPC analysis result showed that cMw contents as 21,248.

### EXAMPLE 2

The implementation of the example 2 was carried out in the same way as the example 1 except for using polysiloxane B (13.1g, 2.6mmol). DOSY analysis for this polymer confirmed that siloxane polymer was bound inside the main chain of polycarbonate. The Si content was analyzed as 2.6 wt% with 1H NMR. cMw contents using GPC was found to be 21,169.

### EXAMPLE 3

The implementation of the example 3 was carried out in the same way as the example 1 except for using polysiloxane C (13.9g, 6.6mmol). DOSY analysis for this polymer confirmed that siloxane polymer was bound inside the main chain of polycarbonate. The Si content was analyzed as 2.6 wt% with 1H NMR. cMw contents using GPC was found to be 25,609.

### EXAMPLE 4

The implementation of the example 4 was carried out in the same way as the example 1 except for using polysiloxane D (5.0g, 2.5mmol). DOSY analysis for this polymer confirmed that siloxane polymer was bound inside the main chain of polycarbonate. The Si content was analyzed as 1.2 wt% with 1H NMR. cMw contents using GPC was found to be 22,565.

### EXAMPLE 5

The implementation of the example 5 was carried out in the same way as the example 1 except for using polysiloxane D (12.7g, 6.3mmol). DOSY analysis for this polymer confirmed that siloxane polymer was bound inside the main chain of polycarbonate. The Si content was analyzed as 2.7 wt% with 1H NMR. cMw contents using GPC was found to be 22,117.

### EXAMPLE 6

The implementation of the example 6 was carried out in the same way as the example 1 except for using polysiloxane D (18.9g, 9.4mmol). DOSY analysis for this polymer confirmed that siloxane polymer was bound inside the main chain of polycarbonate. The Si content was analyzed as 3.9 wt% with 1H NMR. cMw contents using GPC was found to be 22,732.

### EXAMPLE 7

The implementation of the example 7 was carried out in the same way as the example 1 except for using polysiloxane E (11.02g, 3.15mmol). DOSY analysis for this polymer confirmed that siloxane polymer was bound inside the main chain of polycarbonate. The Si content was analyzed as 2.4 wt% with 1H NMR. cMw contents using GPC was found to be 23,754.

### EXAMPLE 8

The implementation of the example 8 was carried out in the same way as the example 1 except for using polysiloxane E (14.7g, 4.19 mmol). DOSY analysis for this polymer confirmed that siloxane polymer was bound inside the main chain of polycarbonate. The Si content was analyzed as 3.2 wt% with 1H NMR. cMw contents using GPC was found to be 22,538.

### EXAMPLE 9

The implementation of the example 9 was carried out in the same way as the example 1 except for using polysiloxane E (18.2g, 5.2mmol). DOSY analysis for this polymer confirmed that siloxane polymer was bound inside the main chain of polycarbonate. The Si content was analyzed as 4.8 wt% with 1H NMR. cMw contents using GPC was found to be 20,841.

### EXAMPLE 10

The implementation of the example 10 was carried out in the same way as the example 1 except for using polysiloxane F (14.4g, 6.9mmol). DOSY analysis for this polymer confirmed that siloxane polymer was bound inside the main chain of polycarbonate. The Si content was analyzed as 2.5 wt% with 1H NMR. cMw contents using GPC was found to be 21,645.

### EXAMPLE 11

By blending the polymer obtained from the example 8 and SC-1190 (BPA-PC) from Jeil Industries at a weight ratio of 50:50, the test was carried out.

### COMPARATIVE EXAMPLE 1

After melting 2,2-bis(4-hydroxyphenyl) propane (BPA) (45.66g, 200mmol) into 400ml of 9.1% NaOH aqueous solution, 200ml of methylene chloride was added. This mixture was strongly stirred and 250ml of methylene chloride solution in which triphosgen (22.95g, 77.3mmol) was dissolved was slowly added for 1 hour while maintaining the solution temperature at 20 to 25°C. Para-cumylphenol (0.99mmol) was added and strongly stirred for 5 min. And then, triethylamine (0.28g, 2mmol) was added into the solution and stirred again for one and a half hour while maintaining the pH of the solution higher than 11 with 50% NaOH solution. The organic layer of the solution was separated and neutralized by adding 200ml of 10% HCl and washed with water till the pH of the solution became neutral. After washing, a part of the solvent from the organic layer was removed. The polymer was precipitated using methanol. This precipitate was filtered and dried to obtain powder form polymer. GPC analysis result showed that the cMw of polymer was 21,920.

### COMPARATIVE EXAMPLE 2

Polycarbonate SC-1100 from Jeil Industries was used for the preparation of Comparative example 2.

### COMPARATIVE EXAMPLE 3

10% of JN100 from SJ Chemical as a copolyester and polycarbonate SC-1100 from Jeil Industries were blended for the preparation of this example.

### COMPARATIVE EXAMPLE 4

20% of JN100 from SJ Chemical as a copolyester and polycarbonate SC-1100 from Jeil Industries were blended for this example.

### COMPARATIVE EXAMPLE 5

30% of JN100 from SJ Chemical as a copolyester and polycarbonate SC-1100 from Jeil Industries were blended to prepare this example.

### COMPARATIVE EXAMPLE 6

40% of JN100 from SJ Chemical as a copolyester and polycarbonate SC-1100 from Jeil Industries were blended for this example.

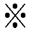 physical characteristics of polymer

### (1) Preparation of specimen

After drying the prepared polymer by the methods in the practical examples 1-11 and comparison examples 1-6 at 120°C for 4 hours, it was processed by injection moulding at forming temperature of 290°C, mould temperature at 70°C inside 10 Oz injection molding machine to prepare a specimen of thickness 3 mm.

### (2) Test for Impact resistance

Notched Izod specimen of thickness 1/8" and 1/4' were prepared as per ASTM D256 and tested at 25°C and -30°C, respectively.

### (3) Test for Chemical resistance

Dumbbell shaped specimen as per ASTM No. 1 was immersed into gasoline for seven days and the changes in the tensile strength was assessed.

### (4) Haze and permeability

Hazeness and permeability were measured for the specimen of thickness 3mm using Haze Meter (YDPO2-0D, NIPPON DENSHOKU).

The measured physical properties for the specimens in the examples 1-11 and comparative examples 1-6 are presented in Table 4.

**[Table 4]**

| | **Si contents (wt%)** | **Molecular wt. (Mw)** | **Haze (%)** | **Permeability (%)** | **1/4" Izod impact strength (room temp.)** | **1/8" Izod impact strength (RT)** | **1/8" Izod impact strength (-30°C)** | **Retention rate of tensile strength after immersing into gasoline(%)** |
|---|---|---|---|---|---|---|---|---|
| **Example 1** | 2.5 | 21,248 | 3.7 | 89.2 | 70.9 | 91.6 | 68.5 | 78 |
| **Example 2** | 2.6 | 21,169 | 4.2 | 88.0 | 71.5 | 92.0 | 69.5 | 80 |
| **Example 3** | 2.6 | 25,609 | 2.84 | 88.7 | 72.8 | 92.6 | 70.6 | 82 |
| **Example 4** | 1.2 | 22,565 | 0.85 | 91.5 | 68.3 | 90.2 | 68.5 | 93 |
| **Example 5** | 2.7 | 22,117 | 1.17 | 90.5 | 72.3 | 91.9 | 73.5 | 97 |
| **Example 6** | 3.9 | 22,732 | 2.85 | 89.2 | 89.5 | 95.9 | 78.5 | 99 |
| **Example 7** | 2.4 | 23,754 | 2.25 | 89.9 | 71.8 | 92.1 | 71.5 | 95 |
| **Example 8** | 3.2 | 22,538 | 3.75 | 89.5 | 83.5 | 93.7 | 74.2 | 98 |
| **Example 9** | 4.8 | 20,841 | 4.65 | 89.0 | 92.7 | 97.1 | 79.6 | 99 |
| **Example 10** | 2.5 | 21,645 | 1.92 | 92.0 | 71.2 | 91.0 | 70.3 | 99 |
| **Example 11** | 1.5 | 23,892 | 1.02 | 90.7 | 67.5 | 89.8 | 66.5 | 93 |
| **Comparative example 1** | 0 | 21,920 | 0.50 | 90.3 | 5.1 | 75.9 | 7.5 | 51 |
| **Comparative example 2** | 0 | 26,800 | 0.95 | 90.1 | 12.1 | 92.1 | 15.5 | 62 |
| **Comparative example 3** | 0 | 26,800 | 0.92 | 90.1 | 6.5 | 60.5 | 10.7 | 83 |
| **Comparative example 4** | 0 | 26,800 | 0.90 | 90.3 | 5.9 | 55.3 | 8.8 | 90 |
| **Comparative example 5** | 0 | 26,800 | 0.90 | 90.6 | 5.1 | 52.3 | 7.8 | 91 |
| **Comparative example 6** | 0 | 26,800 | 0.88 | 90.6 | 4.9 | 52.3 | 7.0 | 93 |

As can be seen from the above Table 4, a polycarbonate resin made as per the present invention in the example 1-11 can maintain excellent impact strength, chemical resistance, and high transparency.

## Claims

1. A polycarbonate resin which comprises a repeating unit of the following chemical formula in its main chain: 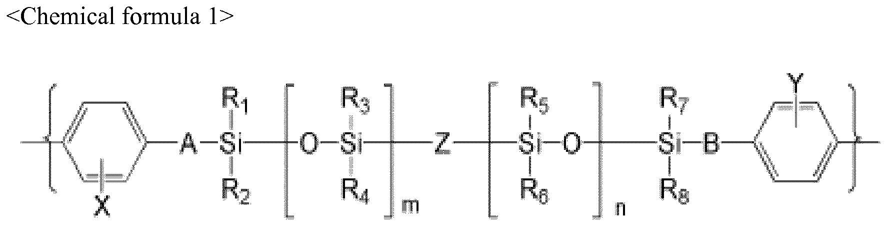 Wherein, in said chemical formula, R₁∼R₈ each are independently C₁-C₁₀ alkyl groups or C₆-C₁₈ aryl groups substituted by one or more groups selected from a group comprising C₁-C₁₀ alkyl group, C₆-C₁₈ aryl group, halogen atom, and C₁-C₁₀ alkoxy group; A and B each are independently C₁-C₁₀ alkylene group, C₆-C₁₈ arylene group; -O-, or -S-. Z is C₆-C₁₈ alkylene group, C₆-C₁₈ cyclo alkylene group, or substituted or non-substituted C₆-C₁₈ arylene group; X and Y each are independently hydrogen, halogen, C₆-C₁₈ alkoxy group, C₁ -C₁₀ alkyl group, or C₆ -C₁₈ aryl group; while, n and m are positive integers, where n+m is an integer having a value from 8 to 100.

2. Polycarbonate resin as claimed in Claim 1, **characterized in that** the repeating unit in said Chemical formula 1 is from 1 to 20 % by weight of the total polycarbonate resin.

3. Polycarbonate resin as claimed in Claim 1, **characterized in that** the Si content is from 0.3 to 10 wt.% of the total polycarbonate resin.

4. Polycarbonate resin as claimed in Claim 1, **characterized in that** the repeating unit in said Chemical formula 1 comprises from 1 to 20 % by weight of the total polycarbonate resin and Si content is from 0.3 to 10 % by weight of the total polycarbonate resin.

5. Polycarbonate resin as claimed in Claim 1, **characterized in that** said Z is a C₁-C₁₂ alkylene group which contains a linear arylene group or does not contain the same.

6. Polycarbonate resin as claimed in Claim 1, **characterized in that** said Z is a linear alkylene.

7. Polycarbonate resin as claimed in Claim 1, **characterized in that** m is an integer having a value of 1 to 60, n is an integer having a value of 1 to 60.

8. A thermoplastic resin composition comprising a polycarbonate resin and additives of polycarbonate resin as claimed in any of the Claims 1 to 7.

9. Thermoplastic resin composition as claimed in Claim 8, **characterized in that** Z is from among the compounds of C₃-C₁₂ cyclo alkylene group, the notched IZOD impact strength of the specimen of thickness 1/4" measured as per ASTM D256 is from 60 to 90 kgf•cm/cm.

10. Thermoplastic resin composition as claimed in Claim 8, wherein Z is from among the compounds of a linear C1-C10 alkyl group, Haze (Hz) of the extruded specimen of thickness 2.5mm measured by Haze meter is from 0.1 to 10%, and the Total Transmitted Light (TT) is from 85 to 99%.

11. Thermoplastic resin composition as claimed in Claim 8, **characterized in that** Z in said chemical formula is from among the compounds of C₆-C₁₈ arylene group, the changes in the tensile strength of the dumbbell shaped test specimen prepared as per ASTM No. 1 before and after immersing into gasoline for seven days are from 0 to 25 %.

12. Thermoplastic resin composition as claimed in Claim 8, **characterized in that** a moulded product is prepared from said thermoplastic resin composition.

13. A polycarbonate resin as claimed in any of the Claims 1 to 7, **characterized in that** said polycarbonate resin does not include polycarbonate and Si.

14. A polycarbonate resin as claimed in Claim 13, **characterized in that** said polycarbonate resin does not include polycarbonate and said Si is included in a ratio ranging from 40:60 to 60:40.
